(19) Europäisches Patentamt
European Patent Office
Office européen des brevets

(11) EP 3 836 292 A1

(12) EUROPEAN PATENT APPLICATION
published in accordance with Art. 153(4) EPC

(43) Date of publication:
**16.06.2021 Bulletin 2021/24**

(21) Application number: **20859619.7**

(22) Date of filing: **01.04.2020**

(51) Int Cl.:
***H01M 10/613*** *(2014.01)* ***H01M 10/651*** *(2014.01)*
***H01M 10/653*** *(2014.01)* ***H01M 10/6551*** *(2014.01)*
***H01M 10/6554*** *(2014.01)*

(86) International application number:
**PCT/JP2020/015092**

(87) International publication number:
**WO 2021/059567 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **25.09.2019 JP 2019173859**

(71) Applicant: **Fuji Polymer Industries Co., Ltd.**
**Nagoya-shi, Aichi 460-0012 (JP)**

(72) Inventor: **HATTORI, Masakazu**
**Nagoya-shi, Aichi 463-0026 (JP)**

(74) Representative: **Diehl & Partner**
**Patent- und Rechtsanwaltskanzlei mbB**
**Erika-Mann-Straße 9**
**80636 München (DE)**

# (54) HEAT TRANSFER SHEET FOR SEALING MATERIALS AND HEAT-GENERATING ELECTRICAL/ELECTRONIC COMPONENT IN WHICH SAME IS INCORPORATED

(57) A thermally conductive sheet 10 for a sealing product is configured to be disposed between a heat generating electrical or electronic component and a heat-dissipating case. The sheet has a Shore 00 hardness of 5 or more and 55 or less. The sheet is in the form of a frame having a space 11 in the frame. The space is configured to be filled with a thermally conductive liquid composition. In the heat generating electrical or electronic component of the present invention, the thermally conductive sheet 11 is attached between the component and the case. The space 11 being defined by the component, the case, and the thermally conductive sheet 10 is filled with the thermally conductive liquid composition. Thus, provided is a thermally conductive sheet for a sealing product that can prevent a thermally conductive liquid from leaking out even when the liquid is directly injected into a space between a heat generating electrical or electronic component such as a battery module and a case, that has a level of flexibility that puts no load on the heat generating electrical or electronic component, and that provides high adhesion between the component and the case. Also provided is a heat generating electrical or electronic component including the sheet.

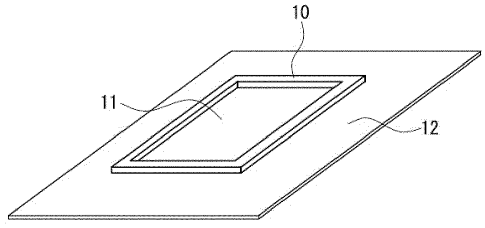


FIG. 1

EP 3 836 292 A1

## Description

### Technical Field

The present invention relates to a thermally conductive sheet for a sealing product that is useful for a battery module for automobiles or the like, and a heat generating electrical or electronic component including the sheet.

### Background Art

A plurality of cells (electric storage devices) are aligned and electrically connected in a battery module for automobiles. A power generating element is housed in a case of each cell. When the cell charges or discharges, heat is generated from the power generating element. When the heat accumulates in the cell, and the temperature of the cell increases, battery performance may decrease. Moreover, in the case of the assembled battery, the heat generation may cause variations in temperature from cell to cell, which may cause variations in the degree of decrease in battery performance from cell to cell. Hence, in the conventional technology, Patent Document 1 proposes that a cooling device for cooling a cell be placed outside a case, and that a sheet-shaped thermally conductive member be interposed between a battery module and the case. Patent Document 2 proposes that silicone gel be provided in bag members of a resin film, and that the bag members be disposed between a unit cell assembly and a housing. Patent Document 3 proposes that an insulating heat-dissipating gel member be disposed between a cell and a housing.

### Prior Art Documents

### Patent Documents

Patent Document 1: JP 2017-010944 A
Patent Document 2: WO 2013/047430 A
Patent Document 3: JP 2010-186715 A

### Disclosure of Invention

### Problem to be Solved by the Invention

However, the heat-dissipating materials between the conventional batteries and the housings have the following problems.

(1) It is difficult to provide the thermally conductive sheet between the battery module and the case without a gap.
(2) If a thermally conductive liquid is provided in the bags of the resin film, the resin film has a low thermal conductivity.
(3) If a thermally conductive liquid is directly injected into a space between a battery module and a case, the liquid leaks out during the injection.

To solve the conventional problems, the present invention provides a thermally conductive sheet for a sealing product that can prevent a thermally conductive liquid from leaking out even when the liquid is directly injected into a space between a heat generating electrical or electronic component such as a battery module and a case, that has a level of flexibility that puts no load on the heat generating electrical or electronic component, and that provides high adhesion between the heat generating electrical or electronic component and the case. The present invention also provides a heat generating electrical or electronic component including the sheet.

### Means for Solving Problem

A thermally conductive sheet for a sealing product of the present invention is a thermally conductive sheet for a sealing product being configured to be disposed between a heat generating electrical or electronic component and a heat-dissipating case. The sheet has a Shore 00 hardness of 5 or more and 55 or less. The sheet is in the form of a frame having a space in the frame, the space being configured to be filled with a thermally conductive liquid composition.

The heat generating electrical or electronic component of the present invention is a heat generating electrical or electronic component including the thermally conductive sheet for a sealing product. The thermally conductive sheet is attached between the heat generating electrical or electronic component and the case. The space being defined by

the heat generating electrical or electronic component, the case, and the thermally conductive sheet is filled with the thermally conductive liquid composition.

Effects of the Invention

The thermally conductive sheet for a sealing product of the present invention has a Shore 00 hardness of 5 or more and 55 or less. The sheet is in the form of a frame having a space in the frame. The space is configured to be filled with a thermally conductive liquid composition. Thus, it is possible to provide a heat generating electrical or electronic component that prevents a thermally conductive liquid composition from leaking out even when the thermally conductive liquid is directly injected into a space between a heat generating electrical or electronic component and a case, and in operation after installation, that has a level of flexibility that puts no load on the heat generating electrical or electronic component, and that provides high adhesion between the heat generating electrical or electronic component and the case. Moreover, in the heat generating electrical or electronic component of the present invention, the sheet is attached between the heat generating electrical or electronic component and the case. The space being defined by the heat generating electrical or electronic component, the case, and the thermally conductive sheet is filled with the thermally conductive liquid composition. Thus, it is possible to provide a heat generating electrical or electronic component that provides high adhesion between the heat generating electrical or electronic component and a case, and high heat dissipation.

Brief Description of Drawings

[FIG. 1] FIG. 1 is a schematic perspective view of a thermally conductive sheet for a sealing product according to one embodiment of the present invention.

[FIG. 2] FIG. 2A is a schematic perspective view in which the thermally conductive sheet for a sealing product according to one embodiment of the present invention is attached to a battery module, FIG. 2B is a schematic perspective view in which the battery module of the same is placed in a case, and FIG. 2C is a cross-sectional view taken along line I-I of FIG. 2B and illustrates a state in which a space being defined by the thermally conductive sheet for a sealing product, the battery module, and the case is filled with a thermally conductive liquid composition.

[FIG. 3] FIGS. 3A and 3B are diagrams illustrating a method of measuring a thermal conductivity of a thermally conductive sheet in an example of the present invention.

[FIG. 4] FIGS. 4A and 4B are photographs illustrating a pressure resistance test method when the thermally conductive liquid composition is provided in the thermally conductive sheet for a sealing product in an example of the present invention.

Description of the Invention

The present invention relates to a thermally conductive sheet for a sealing product being configured to be disposed between a heat generating electrical or electronic component and a case. The sheet is in the form of a frame having a space in the frame, the space being configured to be filled with a thermally conductive liquid composition. The space is to be filled with the thermally conductive liquid composition. For this purpose, the sheet has a Shore 00 hardness of 5 or more. Thus, even when the thermally conductive liquid composition is provided in the space under pressure, the thermally conductive liquid composition can be prevented from leaking out from the sheet. Moreover, the sheet is held between the heat generating electrical or electronic component and the heat-dissipating case. The sheet has a level of flexibility that puts no load on the heat generating electrical or electronic component, provides good adhesion, and keeps the sheet shape even when the thermally conductive liquid composition is provided. For this purpose, the Shore 00 hardness is preferably 55 or less. The Shore 00 hardness is more preferably 7 to 40, and further preferably 10 to 30.

It is preferable that the sheet is in the form of a frame. When the sheet is in the form of a frame, the inner space can be filled with the thermally conductive liquid composition. The size, the width, and the shape of the frame can be selected in accordance with the shape of the heat generating electrical or electronic component. In one example, the sheet is rectangular in the case of a lithium battery module for automobiles. In addition, the sheet can be formed in various shapes such as a circle and polygons other than a rectangle.

The sheet has a thickness of preferably 0.2 to 5 mm, more preferably 0.3 to 4 mm, and further preferably 0.5 to 3 mm. The thickness described above is convenient for leaving a space between the heat generating electrical or electronic component and the heat-dissipating case, and can prevent the liquid leakage when the thermally conductive liquid composition is provided. The width of the sheet can be any value, but is preferably 1 to 50 mm. Similarly, the width described above is convenient for leaving the space between the heat generating electrical or electronic component

and the heat-dissipating case, and can prevent the liquid leakage when the thermally conductive liquid composition is provided.

The thermally conductive sheet has a thermal conductivity of preferably 0.8 W/m·K or more, and more preferably 1.0 W/m·K or more. When the thermal conductivity is 0.8 W/m·K or more, the sheet is suitable for conducting heat from a heat generating part to a heat dissipater.

The heat generating electrical or electronic component can be applied to any semiconductor such as a power module and any heat generating electrical or electronic component such as a lithium battery module. In particular, lithium battery modules for automobiles generate a lot of heat, and the present invention is suitably applied to the lithium battery modules for automobiles.

It is preferable that a matrix polymer of the thermally conductive sheet is a silicone polymer. The silicone polymer has high heat resistance and has been practically used as a thermal interface material (TIM) for various heat generating electrical or electronic components.

It is preferable that the matrix polymer of the thermally conductive sheet contains a crosslinking component and a catalyst component, and that the matrix polymer is an addition-curable silicone polymer. This is because the matrix polymer has a good affinity for the thermally conductive liquid composition to be provided in the space of the thermally conductive sheet.

In the heat generating electrical or electronic component of the present invention, the thermally conductive sheet is attached between the heat generating electrical or electronic component and the case. The space being defined by the heat generating electrical or electronic component, the case, and the thermally conductive sheet is filled with the thermally conductive liquid composition. Thus, it is possible to provide high adhesion between the heat generating electrical or electronic component and the case, and high heat dissipation. A radiation fin or a cooling device may be disposed outside the case. After the thermally conductive liquid composition has been provided in the space, the thermally conductive liquid composition may be held uncured or may be cured.

A matrix polymer of the thermally conductive liquid composition is a silicone polymer. The thermally conductive liquid composition as a composition containing thermally conductive particles has a thermal conductivity of preferably 0.8 W/m·K or more, and more preferably 1.0 W/m·K or more. When the thermal conductivity is 0.8 W/m·K or more, the composition is suitable for conducting heat from the heat generating part to the heat dissipater.

Thermally conductive particles are mixed with the matrix polymer of the thermally conductive sheet used in the present invention and the matrix polymer of the thermally conductive liquid composition. It is preferable that the thermally conductive particles are inorganic particles such as alumina, zinc oxide, magnesium oxide, aluminum nitride, boron nitride, aluminum hydroxide, and silica. These inorganic particles may be added alone or in combination of two or more. If each matrix polymer is 100 parts by mass, the thermally conductive particles are added preferably in an amount of 100 to 4000 parts by mass, and more preferably in an amount of 500 to 3000 parts by mass.

Part or all of the thermally conductive particles used in the present invention may be surface treated with a silane coupling agent. The silane coupling agent may be mixed with the thermally conductive particles in advance to pretreat the thermally conductive particles, or may be added when the matrix polymer, a curing catalyst, and the thermally conductive particles are mixed (integral blending method). In the case of the integral blending method, it is preferable that the silane coupling agent is added in an amount of 0.01 to 10 parts by mass with respect to 100 parts by mass of the thermally conductive particles that are not surface treated and used for the heat-resistant thermally conductive composition of the present invention. The surface treated thermally conductive particles are easily mixed with the matrix polymer, and prevent the curing catalyst from being adsorbed on the thermally conductive particles, and thus have the effects of preventing cure inhibition. This is useful for storage stability.

It is preferable that the thermally conductive sheet has a dielectric breakdown voltage (JIS K6249) of 11 to 16 kV/mm. Thus, it is possible to obtain a heat-resistant thermally conductive sheet having high electrical insulation properties.

<Composition of thermally conductive sheet>

It is preferable that the thermally conductive sheet of the present invention contains the following components (A) to (D), and optionally the following components (E), (F), and (G), and is cured (crosslinked).

(A) Matrix component: an organopolysiloxane having an average of two or more silicon atoms bonded to alkenyl groups per molecule.
(B) Crosslinking component: an organopolysiloxane having an average of two or more silicon atoms bonded to hydrogen atoms per molecule, in which the amount of the organopolysiloxane is 0.01 to 3 mol with respect to 1 mol of the alkenyl groups bonded to the silicon atoms in the component A.
(C) Catalyst component: a platinum group metal catalyst, in which the amount of the platinum group metal catalyst is 0.01 to 1000 ppm in terms of the weight unit of metal atoms with respect to the total amount of the component A

and the platinum group metal catalyst.

(D) Thermally conductive particles: 100 to 4000 parts by mass with respect to 100 parts by mass of an addition-curable silicone polymer component (the component A + the component B).

(E) Alkyltrialkoxysilane: the alkyltrialkoxysilane may be added in an amount of 0.1 to 10 parts by mass with respect to 100 parts by mass of the addition-curable silicone polymer component (the component A + the component B).

(F) Inorganic particle pigment, heat-resistant organic material, heat-resistant material, flame retardant, or the like: these may further be added in an amount of 0.5 to 10 parts by mass with respect to 100 parts by mass of the addition-curable silicone polymer component (the component A + the component B).

(G) An organopolysiloxane having no addition curing reaction group: the organopolysiloxane may be added in an amount of 0.5 to 50 parts by mass with respect to 100 parts by mass of the addition-curable silicone polymer (the component A + the component B).

Hereinafter, each component will be described.

(1) Matrix component (component A)

The matrix component is an organopolysiloxane having two or more alkenyl groups bonded to silicon atoms per molecule. The organopolysiloxane containing two alkenyl groups is the base resin (base polymer component) of a silicone gel composition of the present invention. In the organopolysiloxane, two or more alkenyl groups having 2 to 8 carbon atoms, and preferably 2 to 6 carbon atoms such as vinyl groups or allyl groups are bonded to the silicon atoms per molecule. The viscosity of the organopolysiloxane is preferably 10 to 100000 mPa·s, and more preferably 100 to 10000 mPa·s at 25°C in terms of workability and curability.

Specifically, an organopolysiloxane expressed by the following general formula (Chemical Formula 1) is used. The organopolysiloxane has an average of two or more alkenyl groups per molecule, in which the alkenyl groups are bonded to silicon atoms at both ends of the molecular chain. The organopolysiloxane is a linear organopolysiloxane whose side chains are blocked with alkyl groups. The viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

Chemical Formula 1]

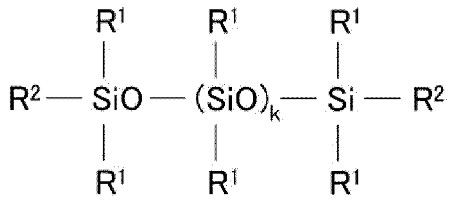

In the general formula, $R^1$ represents substituted or unsubstituted monovalent hydrocarbon groups that are the same as or different from each other and have no aliphatic unsaturated bond, $R^2$ represents alkenyl groups, and k represents 0 or a positive integer. The monovalent hydrocarbon groups represented by $R^1$ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups. The alkenyl groups represented by $R^2$ preferably have 2 to 8 carbon atoms, and more preferably 2 to 6 carbon atoms. Specific examples of the alkenyl groups include vinyl, allyl, propenyl, isopropenyl, butenyl, isobutenyl, hexenyl, and cyclohexenyl groups. In particular, the vinyl group is preferred. In the general formula (Chemical Formula 1), k is typically 0 or a positive integer satisfying $0 \le k \le 10000$, preferably $5 \le k \le 2000$, and more preferably $10 \le k \le 1200$.

The component A may also include an organopolysiloxane having three or more, typically 3 to 30, and preferably about 3 to 20, alkenyl groups bonded to silicon atoms per molecule. The alkenyl groups have 2 to 8 carbon atoms, and preferably 2 to 6 carbon atoms, and can be, e.g., vinyl groups or allyl groups. The molecular structure may be a linear, ring, branched, or three-dimensional network structure. The organopolysiloxane is preferably a linear organopolysiloxane in which the main chain is composed of repeating diorganosiloxane units, and both ends of the molecular chain are blocked with triorganosiloxy groups. The viscosity of the linear organopolysiloxane is preferably 10 to 100000 mPa·s,

and more preferably 100 to 10000 mPa·s at 25°C.

Each of the alkenyl groups may be bonded to any part of the molecule. For example, the alkenyl group may be bonded to either a silicon atom that is at the end of the molecular chain or a silicon atom that is not at the end (but in the middle) of the molecular chain. In particular, a linear organopolysiloxane expressed by the following general formula (Chemical Formula 2) is preferred. The linear organopolysiloxane has 1 to 3 alkenyl groups on each of the silicon atoms at both ends of the molecular chain. In this case, however, if the total number of the alkenyl groups bonded to the silicon atoms at both ends of the molecular chain is less than 3, at least one alkenyl group is bonded to the silicon atom that is not at the end (but in the middle) of the molecular chain (e.g., as a substituent in the diorganosiloxane unit). As described above, the viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

[Chemical Formula 2]

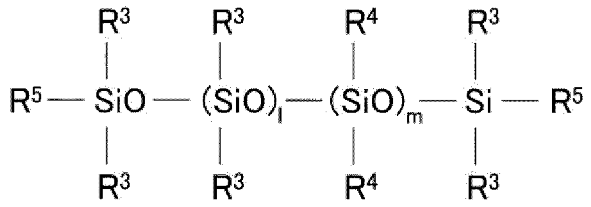

In the general formula, $R^3$ represents substituted or unsubstituted monovalent hydrocarbon groups that are the same as or different from each other, and at least one of them is an alkenyl group, $R^4$ represents substituted or unsubstituted monovalent hydrocarbon groups that are the same as or different from each other and have no aliphatic unsaturated bond, $R^5$ represents alkenyl groups, and l and m represent 0 or a positive integer. The monovalent hydrocarbon groups represented by $R^3$ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; alkenyl groups such as vinyl, allyl, propenyl, isopropenyl, butenyl, hexenyl, cyclohexenyl, and octenyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups.

The monovalent hydrocarbon groups represented by $R^4$ also preferably have 1 to 10 carbon atoms, and more preferably 1 to 6 carbon atoms. The monovalent hydrocarbon groups may be the same as the specific examples of $R^1$, but do not include an alkenyl group. The alkenyl groups represented by $R^5$ preferably have 2 to 8 carbon atoms, and more preferably 2 to 6 carbon atoms. Specific examples of the alkenyl groups are the same as those of $R^2$ in the general formula (Chemical Formula 1), and the vinyl group is preferred.

In the general formula, l and m are typically 0 or positive integers satisfying $0 < l + m \leq 10000$, preferably $5 \leq l + m \leq 2000$, and more preferably $10 \leq l + m \leq 1200$. Moreover, l and m are integers satisfying $0 < l/(l + m) \leq 0.2$, and preferably $0.0011 \leq l/(l + m) \leq 0.1$.

(2) Crosslinking component (component B)

The component B is an organohydrogenpolysiloxane that acts as a crosslinking agent. The addition reaction (hydrosilylation) between SiH groups in this component and alkenyl groups in the component A produces a cured product. Any organohydrogenpolysiloxane having two or more hydrogen atoms bonded to silicon atoms (i.e., SiH groups) per molecule may be used. The molecular structure of the organohydrogenpolysiloxane may be a linear, ring, branched, or three-dimensional network structure. The number of silicon atoms in a molecule (i.e., the degree of polymerization) may be 2 to 1000, and preferably about 2 to 300.

The locations of the silicon atoms to which the hydrogen atoms are bonded are not particularly limited. The silicon atoms may be either at the ends or not at the ends (but in the middle) of the molecular chain. The organic groups bonded to the silicon atoms other than the hydrogen atoms may be, e.g., substituted or unsubstituted monovalent hydrocarbon groups that have no aliphatic unsaturated bond, which are the same as those of $R^1$ in the general formula (Chemical Formula 1).

An example of the organohydrogenpolysiloxane of the component B is expressed by the following general formula (Chemical Formula 3).

[Chemical Formula 3]

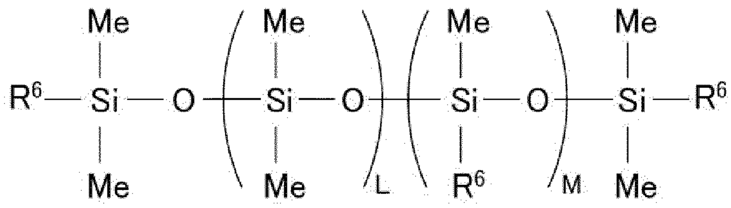

In the above general formula, $R^6$ represents an alkyl group, a phenyl group, an epoxy group, an acryloyl group, a methacryloyl group, an alkoxy group, and a hydrogen atom, which are the same as or different from each other, and at least two of them are hydrogen atoms. L is an integer of 0 to 1000, and preferably 0 to 300, and M is an integer of 1 to 200. In particular, in order for the thermally conductive sheet to have a Shore 00 hardness of 5 or more and 55 or less, an Si-H terminated organohydrogenpolysiloxane is added in an amount of preferably 10 to 30 parts by mass, and more preferably 15 to 30 parts by mass with respect to 100 parts by mass of the silicone polymer. A preferable compound to be added for the adjustment of the hardness has a methyl group for $R^6$ in a side chain and hydrogen for $R^6$ at both ends.

(3) Catalyst component (component C)

The catalyst component of the component C facilitates the curing of the present composition. The component C may be a catalyst used for a hydrosilylation reaction. Examples of the catalyst include platinum group metal catalysts such as platinum-based, palladium-based, and rhodium-based catalysts. The platinum-based catalysts include, e.g., platinum black, chloroplatinic acid (II), chloroplatinic acid, a reaction product of chloroplatinic acid and monohydric alcohol, a complex of chloroplatinic acid and olefin or vinylsiloxane, and platinum bisacetoacetate. The component C is mixed in an amount needed for curing, and the amount can be appropriately adjusted in accordance with a desired curing rate or the like. It is preferable that the component C is added in an amount of 0.01 to 1000 ppm based on the weight of metal atoms with respect to the total amount of the component A and the platinum group metal catalyst.

(4) Thermally conductive particles (component D)

The component D is added preferably in an amount of 100 to 4000 parts by mass with respect to 100 parts by mass of the addition-curable silicone polymer component (the component A + the component B). Thus, the thermal conductivities of the heat-resistant thermally conductive composition and the heat-resistant thermally conductive sheet can be 0.8 W/m·K or more. It is preferable that the thermally conductive particles are at least one selected from alumina, zinc oxide, magnesium oxide, aluminum nitride, boron nitride, aluminum hydroxide, and silica. The thermally conductive particles may have various shapes such as spherical, scaly, and polyhedral. The specific surface area of the thermally conductive particles is preferably 0.06 to 15 $m^2/g$. The specific surface area is a BET specific surface area and is measured in accordance with JIS R 1626. The average particle size of the thermally conductive particles is preferably 0.1 to 100 $\mu m$. The average particle size may be measured with a laser diffraction scattering method to determine D50 (median diameter) in a volume-based cumulative particle size distribution. The measuring device may be, e.g., a laser diffraction/scattering particle size distribution analyzer LA-950 S2 manufactured by HORIBA, Ltd.

The thermally conductive particles include at least two types of inorganic particles with different average particle sizes. Thus, small-size, thermally conductive inorganic particles fill the spaces between large-size inorganic particles and these particles are mixed, which can provide nearly the closest packing and improve thermal conductive properties.

It is preferable that the inorganic particles are surface treated with a silane compound expressed by $R_aSi(OR')_{3-a}$, where R represents a substituted or unsubstituted organic group having 1 to 20 carbon atoms, R' represents an alkyl group having 1 to 4 carbon atoms, and a is 0 or 1, or with its partial hydrolysate. Examples of the alkoxysilane compound (simply referred to as "silane" in the following) include the following: methyltrimethoxysilane; ethyltrimethoxysilane; propyltrimethoxysilane; butyltrimethoxysilane; pentyltrimethoxysilane; hexyltrimethoxysilane; hexyltriethoxysilane; octyltrimethoxysilane; octyltriethoxysilane; decyltrimethoxysilane; decyltriethoxysilane; dodecyltrimethoxysilane; dodecyltriethoxysilane; hexadecyltrimethoxysilane; hexadecyltriethoxysilane; octadecyltrimethoxysilane; and octadecyltriethoxysilane. These silane compounds may be used alone or in combinations of two or more. The alkoxysilane and one-end silanol siloxane may be used together as the surface treatment agent. In this case, the surface treatment may include adsorption in addition to a covalent bond.

(5) Other additive agents

The composition of the present invention may include components other than the above as needed. For example, the composition may include a heat resistance improver such as colcothar, titanium oxide, or cerium oxide, a flame retardant aid, and a curing retarder. An organic or inorganic particle pigment may be added for coloring and toning. Moreover, alkoxy group-containing silicone may be added, e.g., for the surface treatment of a filler. The organopolysiloxane having no addition curing reaction group may be added. The viscosity of the organopolysiloxane is preferably 10 to 100000 mPa·s, and more preferably 100 to 10000 mPa·s at 25°C in terms of workability.

<Composition of thermally conductive liquid composition>

The composition of the thermally conductive liquid composition may be the same as that of the thermally conductive sheet, or may be the following composition.

(a) Matrix component: a linear organopolysiloxane having an average of two or more alkenyl groups per molecule, in which the alkenyl groups are bonded to silicon atoms at both ends of the molecular chain.
(b) Crosslinking component: an organohydrogenpolysiloxane having an average of two or more hydrogen atoms bonded to silicon atoms per molecule, in which the amount of the organohydrogenpolysiloxane is less than 1 mol with respect to 1 mol of the alkenyl groups bonded to the silicon atoms in the component A.
(c) Thermally conductive particles: 100 to 4000 parts by mass with respect to 100 parts by mass of an addition-curable silicone polymer component (the component A + the component B).

The components (a) to (c) are the same as the matrix component, the crosslinking component, and the thermally conductive particles described in the composition of the thermally conductive sheet. When the components (a) to (c) are used, the thermally conductive liquid composition may be held uncured or may be cured with the diffusion of the curing catalyst of the thermally conductive sheet after being provided in the space. If the composition of the thermally conductive liquid composition is the same as that of the thermally conductive sheet, the thermally conductive liquid composition can be cured after being provided. Moreover, the ratio of the crosslinking component added may be reduced, and thus partial crosslinking may be performed. In this case, the thermally conductive liquid composition is in the form of a paste.

Moreover, instead of the components (a) and (b), dimethyl silicone oil having no reactive group may be used. In this case, crosslinking is not performed.

It is preferable that the viscosity of the thermally conductive liquid material is 50 to 5000 Pa·s. The viscosity is measured using a HAAKE rheometer (MARS III) under the following conditions: Gap: 0.5 mm, rotational speed: 1(1/s), and temperature: 25°C.

Hereinafter, the present invention will be described with reference to the drawings. The same components are denoted with the same reference numerals in the drawings. FIG. 1 is a schematic perspective view of a thermally conductive sheet for a sealing product according to one embodiment of the present invention. The thermally conductive sheet 10 for a sealing product is in the form of a frame having a space 11 in the frame. The space is configured to be filled with the thermally conductive liquid composition. The sheet 10 has a Shore 00 hardness of 5 or more and 55 or less. The sheet 10 is disposed on a polyethylene terephthalate (PET) film 12, packaged, and carried.

FIG. 2A is a schematic perspective view in which the thermally conductive sheet 10 for a sealing product according to one embodiment of the present invention is attached to a bottom surface of a battery module 13. FIG. 2B is a schematic perspective view in which the battery module 13 of the same is turned over and placed in a case 14. FIG. 2C is a cross-sectional view taken along line I-I of FIG. 2B and illustrates a state in which the space being defined by the thermally conductive sheet 10 for a sealing product, the battery module 13, and the case 14 is filled with a thermally conductive liquid composition 15. FIGS. 2A to 2C illustrate an example in which the thermally conductive sheet 10 for a sealing product is attached to the bottom surface of the battery module 13, and the frame-shaped space 11 is filled with the thermally conductive liquid composition. However, the attachment position of the thermally conductive sheet for a sealing product is not limited to the bottom surface of the battery module 13. The thermally conductive sheet 10 for a sealing product may be attached to a side surface or an upper surface of the battery module 13, and the thermally conductive liquid composition may be provided in the frame-shaped space 11.

FIGS. 3A and 3B are diagrams illustrating a method of measuring the thermal conductivity of a thermally conductive sheet in an example of the present invention. The thermal conductivity of the thermally conductive sheet is measured by a hot disk (in accordance with ISO 22007-2). As illustrated in FIG. 3A, using a thermal conductivity measuring apparatus 1, a polyimide film sensor 2 is sandwiched between two samples 3a, 3b, and constant power is applied to the sensor 2 to generate a certain amount of heat. Then, the thermal characteristics are analyzed from a temperature rise value of the sensor 2. The sensor 2 has a tip 4 with a diameter of 7 mm. As illustrated in FIG. 3B, the tip 4 has a

double spiral structure of electrodes. Moreover, an electrode 5 for an applied current and an electrode 6 for a resistance value (temperature measurement electrode) are located on the lower portion of the sensor 2.

FIGS. 4A and 4B are photographs illustrating a pressure resistance test method when the thermally conductive liquid composition is provided in the thermally conductive sheet for a sealing product in an example of the present invention. As illustrated in FIG. 4A, the thermally conductive sheet 10 is placed on an aluminum plate 16. Next, as illustrated in FIG. 4B, an acrylic resin plate 17 with a thickness of 10 mm is placed on the thermally conductive sheet 10, and is fastened to the aluminum plate 16 with four bolts. The aluminum plate 16 and the acrylic resin plate 17 are spaced at a predetermined distance from each other. An inlet 18 and a pressure sensor 19 are disposed on the acrylic resin plate 17. Next, the thermally conductive liquid composition is provided from the inlet 18 under pressure, and a pressure applied to the thermally conductive sheet 10 is measured. The thermally conductive liquid composition can be placed in a dispenser or a like and press injected through the inlet 18.

Examples

Hereinafter, the present invention will be described by way of examples. However, the present invention is not limited to the following examples. Various parameters were measured in the following manner.

<Thermal conductivity>

The thermal conductivity was measured by the method illustrated in FIGS. 3A and 3B. The thermal conductivity was calculated by the following formula (1).

[Formula 1]

$$\lambda = \frac{Po \cdot D(\tau)}{\pi^{3/2} \cdot r} \cdot \frac{D(\tau)}{\Delta T(\tau)}$$

| | |
|---|---|
| $\lambda$: | Thermal conductivity (W/m·K) |
| $P_0$: | Constant power (W) |
| r: | Radius of sensor (m) |
| $\tau$: | $\sqrt{\alpha \cdot t / r^2}$ |
| $\alpha$: | Thermal diffusivity of sample ($m^2/s$) |
| t: | Measuring time (s) |
| $D(\tau)$: | Dimensionless function of $\tau$ |
| $\Delta T(\tau)$: | Temperature rise of sensor (K) |

<Hardness>

The Shore 00 hardness of a thermally conductive sheet was measured in accordance with ASTM D2240.

<Pressure resistance test>

A pressure was measured as the above description on FIGS. 4A and 4B.

(Example 1)

1. Production of sheet in form of frame

<Materials>

The following materials were prepared.

(1) Solution A that contained a matrix component (component A) and a catalyst component (component C) of a

generally commercially available two-part addition-curable silicone polymer, 50 g
(2) Solution B that contained the matrix component (component A) and a crosslinking component (component B1) of the generally commercially available two-part addition-curable silicone polymer, 40 g
(3) Terminated Si-H organohydrogenpolysiloxane (component B2), 10 g
(4) Aluminum oxide powder (D50: about 1 to 2 μm), 500 g
(5) Aluminum hydroxide powder (D50: about 50 pm), 550 g
(6) Octyltrimethoxysilane

<Production method>

(1) The aluminum oxide and the octyltrimethoxysiloxane were kneaded.
(2) The aluminum hydroxide was added to the materials in (1) and kneaded.
(3) The solution A, the solution B, and the component B2 were added to the materials in (2) and kneaded.
(4) After defoaming, the kneaded materials were sandwiched between PET films to prepare a sheet-shaped product. The sheet-shaped product was heated and cured at a temperature of 100°C for 10 minutes, and was cut. Thus, two sheets in the form of a frame were obtained. One sheet had an outer shape of 40 mm in lateral length, 70 mm in longitudinal length, 5 mm in width, and 2 mm in thickness. The other sheet had an outer shape of 40 mm in lateral length, 70 mm in longitudinal length, 5 mm in width, and 1 mm in thickness. An outer circumferential area and a central area of each of the sheets were cut using a cutting plotter, and were removed. The materials kneaded in (3) may be applied onto a PET film using a dispenser or the like to form a frame.

* Aluminum oxide and aluminum hydroxide that have already been surface treated with a silane coupling agent may be used. In this case, the steps (1) and (2) are not required.
* The ratios of the silicone base (the component B) and the terminated Si-H organohydrogenpolysiloxane are changed by changing the types of fillers or a surface treatment material.

2. Production of thermally conductive liquid composition

(1) Dimethyl silicone oil, 100 g
(2) Aluminum oxide powder (D50: about 35 pm), 200 g
(3) Aluminum oxide powder (D50: about 2 μm), 500 g
(4) Silicon oxide powder (D50: about 50 pm), 200 g

<Production method>

(1) Three types of powder were added to the dimethyl silicone oil and kneaded.
(2) The viscosity of an obtained thermally conductive liquid material was 1000 Pa·s (at 25°C).

3. Evaluation test

The hardness, the thermal conductivity, and the specific gravity of the sheet in the form of a frame thus obtained were measured. Moreover, as illustrated in FIGS. 4A and 4B, the thermally conductive liquid composition was provided in the space of the sheet in the form of a frame, and a pressure resistance test was performed during such provision. The injection pressure was 0.35 MPa. Moreover, it was visually confirmed whether the thermally conductive liquid material leaked out from the sheet in the form of a frame.
Table 1 shows the conditions and results together.

(Examples 2-4, Comparative Examples 1-2)

Examples 2-4 and Comparative Examples 1-2 were performed in the same manner as Example 1 except for the differences shown in Table 1.

[TABLE 1]

| | Ex. 1 | Ex. 2 | Ex. 3 | Ex. 4 | Comp. Ex. 1 | Comp. Ex. 2 |
|---|---|---|---|---|---|---|
| Silicone base polymer (Component A, g) | 50 | 50 | 50 | 50 | 50 | 50 |
| Silicone crosslinking component (Component B1, g) | 40 | 30 | 25 | 20 | 50 | 15 |
| Si-H terminated organohydrogenpolysiloxane (Component B2, g) | 10 | 20 | 25 | 30 | 0 | 35 |
| Aluminum oxide powder (D50: about 1 to 2 μm, g) | 500 | 500 | 500 | 500 | 500 | 500 |
| Aluminum hydroxide powder (D50: about 50 μm, g) | 550 | 550 | 550 | 550 | 550 | 550 |
| Octyltrimethoxysilane (g) | 4.4 | 4.4 | 4.4 | 4.4 | 4.4 | 4.4 |
| Hardness [Shore 00] | 33 | 20 | 11 | 5 | 57 | 4 |
| Thermal conductivity (W/m·K) | 3.0 | 3.0 | 3.0 | 3.0 | 3.0 | 3.0 |
| Specific gravity | 2.49 | 2.49 | 2.49 | 2.49 | 2.49 | 2.49 |
| Pressure resistance test result (MPa)<br>Thickness 2 mm → Thickness 1.8 mm<br>Thickness 1 mm → Thickness 0.9 mm | <br>0.22<br>0.20 | <br>0.13<br>0.13 | <br>0.07<br>0.12 | <br>0.06<br>0.12 | <br>0.27<br>0.26 | <br>0<br>0 |
| Presence or absence of leakage of thermally conductive liquid material from sheet in form of frame | Absent | Absent | Absent | Absent | Absent | Present |
| Ex.: Example, Comp. Ex.: Comparative Example | | | | | | |

As is clear from the examples and the comparative examples, if the sheet in the form of a frame had a Shore 00 hardness of 5 or more, when the thermally conductive liquid material was press injected, a lateral pressure was applied to the sheet in the form of a frame, and the liquid leakage did not occur. If the Shore 00 hardness is more than 55, a repulsive stress in installing a battery increases, and a load applied to the battery module may cause a failure.

Industrial Applicability

As described above, the thermally conductive sheet for a sealing product of the present invention and the heat generating electrical or electronic component including the sheet can be applied to any semiconductor such as a power module and any heat generating electrical or electronic component such as a lithium battery module. In particular, lithium battery modules for automobiles generate a lot of heat, and the present invention is suitably applied to the lithium battery modules for automobiles.

Description of Reference Numerals

| | |
|---|---|
| 1 | Thermal conductivity measuring apparatus |
| 2 | Sensor |
| 3a, 3b | Sample |
| 4 | Tip of the sensor |
| 5 | Electrode for applied current |
| 6 | Electrode for resistance value (temperature measurement electrode) |
| 10 | Thermally conductive sheet for sealing product |
| 11 | Space |
| 12 | Polyethylene terephthalate (PET) film |

13 Battery module
14 Case
15 Thermally conductive liquid composition
16 Aluminum plate
17 Acrylic resin plate
18 Inlet
19 Pressure sensor

**Claims**

1. A thermally conductive sheet for a sealing product being configured to be disposed between a heat generating electrical or electronic component and a heat-dissipating case,
wherein the sheet has a Shore 00 hardness of 5 or more and 55 or less, and the sheet is in the form of a frame having a space in the frame, the space being configured to be filled with a thermally conductive liquid composition.

2. The thermally conductive sheet for a sealing product according to claim 1, wherein the sheet is rectangular.

3. The thermally conductive sheet for a sealing product according to claim 1 or 2, wherein the sheet has a thickness of 0.2 to 5 mm.

4. The thermally conductive sheet for a sealing product according to any of claims 1 to 3, wherein the sheet has a width of 1 to 50 mm.

5. The thermally conductive sheet for a sealing product according to any of claims 1 to 4, wherein the thermally conductive sheet has a thermal conductivity of 0.8 W/m·K or more.

6. The thermally conductive sheet for a sealing product according to any of claims 1 to 5, wherein the heat generating electrical or electronic component is a lithium battery module.

7. The thermally conductive sheet for a sealing product according to any of claims 1 to 6, wherein a matrix polymer of the thermally conductive sheet is a silicone polymer.

8. The thermally conductive sheet for a sealing product according to any of claims 1 to 7,
wherein the matrix polymer of the thermally conductive sheet contains a curing catalyst, and
the matrix polymer is an addition-curable silicone polymer.

9. A heat generating electrical or electronic component comprising the thermally conductive sheet for a sealing product according to any of claims 1 to 8,
wherein the thermally conductive sheet is attached between the heat generating electrical or electronic component and the case, and
the space being defined by the heat generating electrical or electronic component, the case, and the thermally conductive sheet is filled with the thermally conductive liquid composition.

10. The heat generating electrical or electronic component according to claim 9, wherein the heat generating electrical or electronic component is a battery module.

11. The heat generating electrical or electronic component according to claim 9 or 10,
wherein a matrix polymer of the thermally conductive liquid composition is a silicone polymer, and
the thermally conductive liquid composition has a thermal conductivity of 0.8 W/m·K or more.

12. The heat generating electrical or electronic component according to claim 10 or 11, wherein the battery module is a lithium battery module for automobiles.

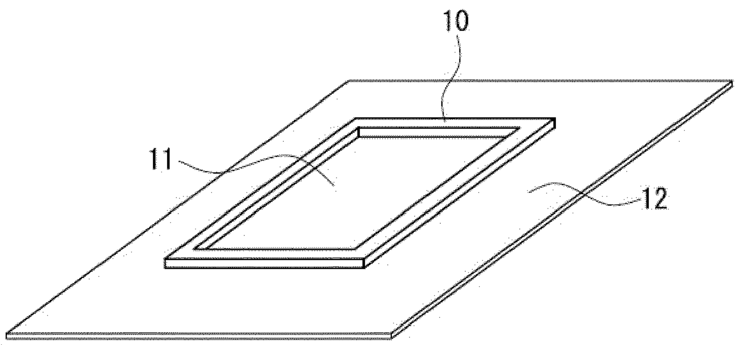


FIG. 1

FIG. 2A

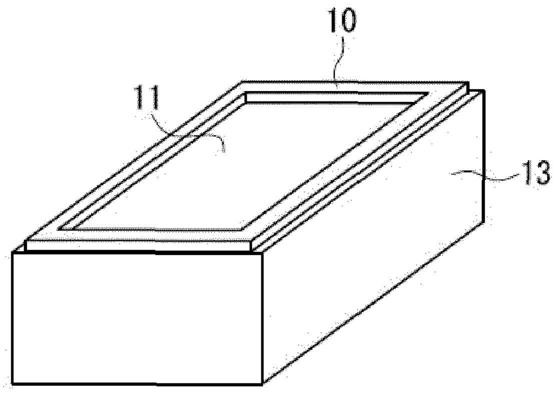


FIG. 2B

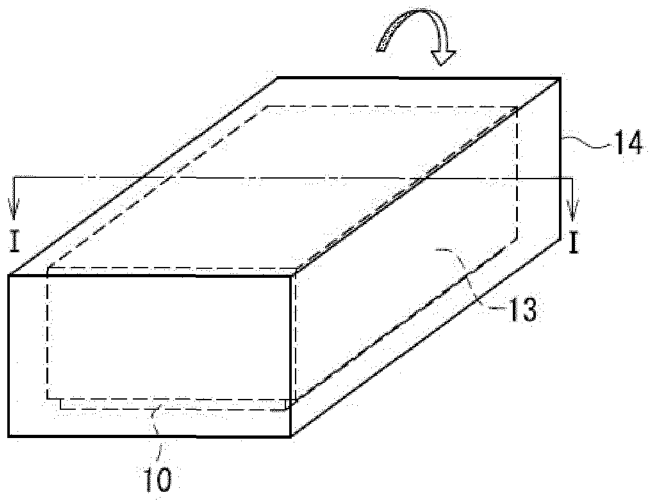


FIG. 2C

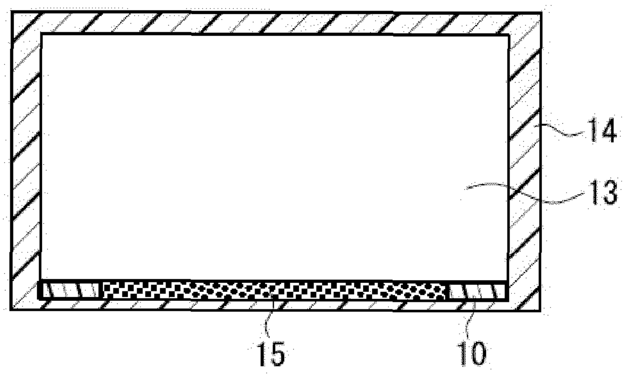

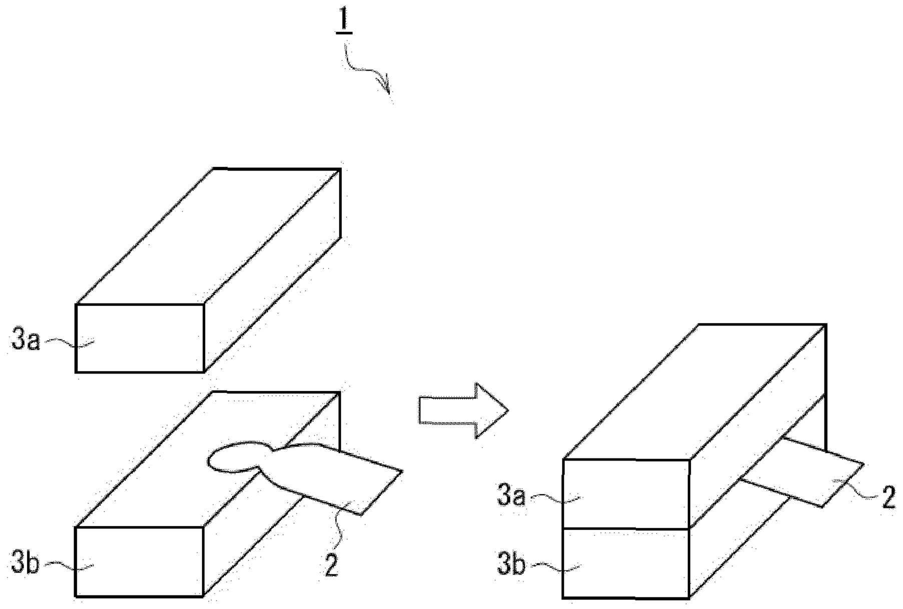


FIG. 3A

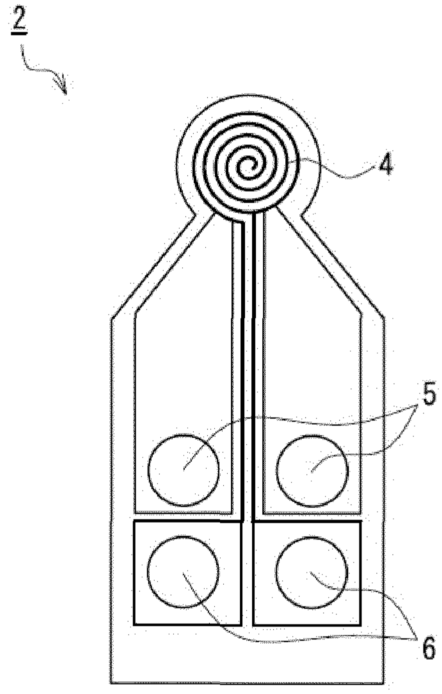


FIG. 3B

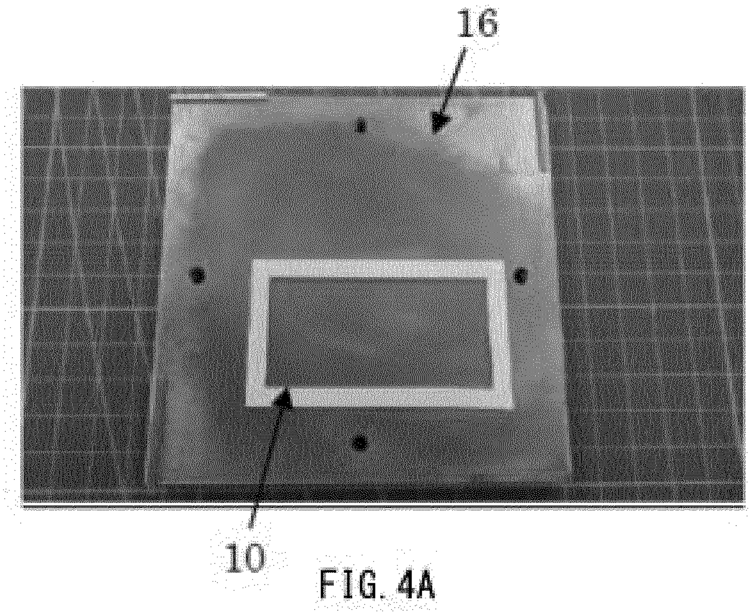


FIG. 4A

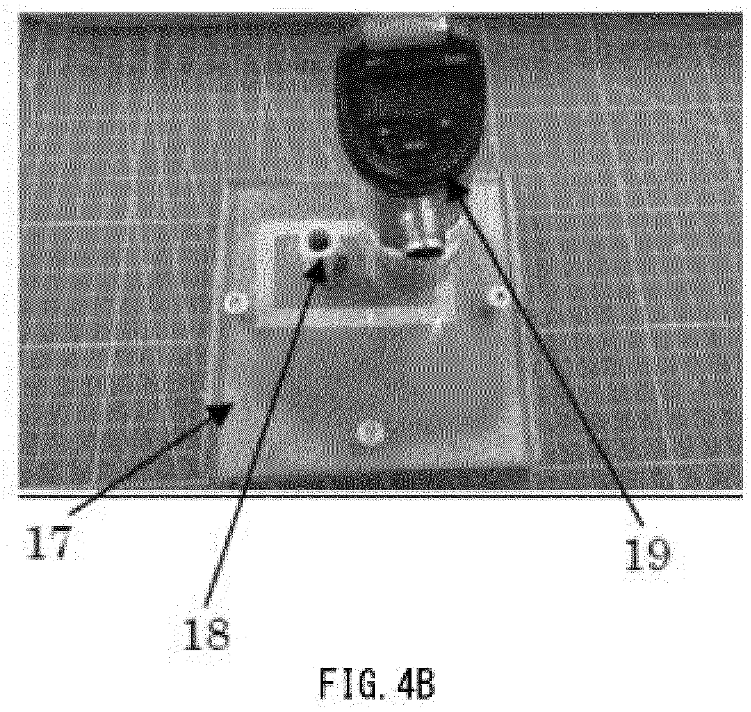


FIG. 4B

## INTERNATIONAL SEARCH REPORT

International application No.
PCT/JP2020/015092

A. CLASSIFICATION OF SUBJECT MATTER
Int. Cl. H01M10/613(2014.01)i, H01M10/651(2014.01)i, H01M10/653(2014.01)i, H01M10/6551(2014.01)i, H01M10/6554(2014.01)i, H05K7/20(2006.01)i
FI: H01M10/6554, H01M10/613, H01M10/653, H01M10/651, H01M10/6551, H05K7/20 A

According to International Patent Classification (IPC) or to both national classification and IPC

B. FIELDS SEARCHED

Minimum documentation searched (classification system followed by classification symbols)
Int. Cl. H01M10/613, H01M10/651, H01M10/653, H01M10/6551, H01M10/6554, H05K7/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2015/102046 A1 (MITSUBISHI ELECTRIC CORP.) 09 July 2015, paragraphs [0106]-[0114], fig. 19 | 1-12 |
| Y | JP 2017-519888 A (HENKEL IP & HOLDING GMBH) 20 July 2017, paragraphs [0002], [0006], [0013], [0014], [0025], [0027], [0031], [0032], fig. 1, 5 | 1-12 |
| Y | JP 2019-40745 A (SHIN-ETSU POLYMER CO., LTD.) 14 March 2019, paragraphs [0004], [0022], [0033], fig. 2 | 6, 10, 12 |
| A | JP 2017-38086 A (DEXERIALS CORP.) 16 February 2017, in particular, paragraphs [0092], [0093] | 1-12 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10.06.2020 | 23.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/015092

| Patent Documents referred to in the Report | Publication Date | Patent Family | Publication Date |
|---|---|---|---|
| WO 2015/102046 A1 | 09.07.2015 | US 2016/0276245 A1 paragraphs [0129]-[0137], fig. 19<br>CN 105900229 A | |
| JP 2017-519888 A | 20.07.2017 | US 2016/0009975 A1 paragraphs [0002], [0006], [0024], [0025], [0043], [0045], [0052], [0053], fig. 1, 5<br>WO 2016/007287 A1<br>EP 3172734 A1<br>TW 201615716 A<br>KR 10-2017-0032278 A<br>CN 106663473 A | |
| JP 2019-40745 A | 14.03.2019 | (Family: none) | |
| JP 2017-38086 A | 16.02.2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017010944 A
- WO 2013047430 A
- JP 2010186715 A